# EUROPÄISCHE PATENTSCHRIFT

(11) **EP 3 621 826 B1**
(45) Veröffentlichungstag und Bekanntmachung des Hinweises auf die Patenterteilung: **27.01.2021**
(21) Anmeldenummer: 18709293.7
(22) Anmeldetag: 27.02.2018
(51) Int. Cl.: B60C 11/13, B60C 11/04, B60C 11/03

(54) **FAHRZEUGLUFTREIFEN**
PNEUMATIC VEHICLE TIRE
PNEUMATIQUE DE VÉHICULE

(30) Priorität: 11.05.2017 DE 102017208010
(43) Veröffentlichungstag der Anmeldung: 18.03.2020
(73) Patentinhaber: Continental Reifen Deutschland GmbH, 30165 Hannover (DE)
(72) Erfinder: OCANA AMEZCUA, Jesus, 30167 Hannover (DE); LUTZ, André, 30167 Hannover (DE)
(74) Vertreter: Finger, Karsten
(86) Internationale Anmeldenummer: PCT/EP2018/054721
(87) Internationale Veröffentlichungsnummer: WO 2018/206175

(56) Entgegenhaltungen:
- WO-A1-2017/025212
- JP-A- H1 024 705
- JP-A- H09 164 814
- JP-A- S62 286 803
- JP-A- 2007 001 434
- JP-A- 2014 076 764
- US-A- 2 781 815
- US-A- 2 843 172
- US-A- 3 094 157
- US-A- 4 481 992
- US-A1- 2016 318 347
- US-A1- 2016 318 348

## Beschreibung

Die Erfindung betrifft einen Fahrzeugluftreifen, insbesondere einen Nutzfahrzeugreifen, mit einem eine Profilierung aufweisenden Laufstreifen mit zumindest einer in Umfangsrichtung umlaufenden, auf Profiltiefe ausgeführten Umfangsrille, welche sich im Querschnitt, beginnend bei der Laufstreifenaußenfläche, aus drei aneinander anschließenden Rillenabschnitten zusammensetzt, einem sich trichterförmig nach außen erweiternden radial äußeren Rillenabschnitt, einem 1 mm bis 3 mm breiten verengten Rillenabschnitt und einem, gegenüber dem verengten Rillenabschnitt erweiterten und die größte Querschnittsfläche von allen Rillenabschnitten aufweisenden radial inneren Rillenabschnitt, welcher von zwei Deckenflanken, an diese anschließende seitliche Rillenflanken und einem Rillenboden begrenzt ist, wobei die seitlichen Rillenflanken im radial inneren Rillenabschnitt unter Verringerung ihres gegenseitigen Abstandes zum Rillenboden unter einem Winkel von 5° bis 25° zur radialen Richtung verlaufen.

Es ist bekannt und üblich, in Laufstreifen von Nutzfahrzeugreifen mindestens zwei in Umfangsrichtung umlaufende Umfangsrillen vorzusehen. Solche Umfangsrillen trennen Umfangsrippen voneinander, die mit weiteren Rillen, beispielsweise Querrillen, versehen sein können, welche den Umfangsrippen eine klotzartige Strukturierung verleihen. Weit verbreitet in Laufstreifen von Nutzfahrzeugreifen sind Umfangsrillen, welche von unter einem kleinen Winkel zur radialen Richtung verlaufenden Rillenflanken begrenzt sind. Bekannt sind jedoch auch wesentlich komplexere Ausgestaltungen der Querschnitte von Umfangsrillen, beispielsweise mit Rillenflanken mit auf vielfältige Weise gestalteten Vorsprüngen, um insbesondere das Verfangen von Steinen in den Umfangsrillen zu verhindern und das Auswerfen der Steine zu begünstigen. Derartige Umfangsrillen weist beispielsweise der aus der US 2,843,172 A bekannte Laufstreifen auf.

Ein Nutzfahrzeugreifen der eingangs genannten Art ist beispielsweise aus der WO 2017 025 212 A1 bekannt. Der Reifen weist einen Laufstreifen mit Umfangsrillen auf, welche sich in Draufsicht und in Umfangsrichtung aus ersten und zweiten Umfangsabschnitten zusammensetzen, wobei die ersten und die zweiten Umfangsabschnitte alternierend aufeinanderfolgen. In den ersten Umfangsabschnitten setzt sich die Umfangsrille, im Querschnitt betrachtet, aus drei aneinander anschließenden Rillenabschnitten zusammen, einem sich trichterförmig nach außen erweiternden radial äußeren Rillenabschnitt, einem 2,5 mm bis 3,0 mm breiten verengten Rillenabschnitt und einem gegenüber dem verengten Rillenabschnitt erweiterten, radial inneren Rillenabschnitt. Der radial innere Rillenabschnitt weist die größte Querschnittsfläche von allen Rillenabschnitten auf und ist von zwei Deckenflanken, an diese anschließende Rillenflanken und einem Rillenboden begrenzt. In jedem zweiten Umfangsabschnitt ist die Umfangsrille, im Querschnitt betrachtet, vom Rillenboden ausgehend von zwei zur radialen Richtung geneigten, bis zur Laufstreifenaußenfläche reichenden Rillenflanken begrenzt. Die ersten Umfangsabschnitte weisen in Draufsicht eine wabenartige bzw. achteckige Form auf, die zweiten Umfangsabschnitte weisen in Draufsicht die Form von in Umfangsrichtung langgestreckten Rechtecken auf. Ein Laufstreifen mit solchen Umfangsrillen soll im Hinblick auf den Rollwiderstand, die Nässeeigenschaften und das Steinefangverhalten günstig sein.

Aus der JP S62 286 803 A ist ein Fahrzeugluftreifen mit einem Laufstreifen mit in Draufsicht in Umfangsrichtung zick-zack-förmig verlaufenden Umfangsrillen bekannt, welche, im Querschnitt betrachtet, in radialer Richtung zick-zack-förmig ausgebildete Rillenflanken aufweisen. Diese Maßnahmen sollen ein Verfangen von Steinen in den Umfangsrillen verhindern, wobei gute Nassgriffeigenschaften erhalten bleiben sollen.

Die US 2016 318 348 A1 offenbart einen Fahrzeugluftreifen mit einem Laufstreifen mit Rillen, welche sich im Querschnitt und von der Laufstreifenperipherie ausgehend aus rechteckigen Außenrille, einem in radialer Richtung verlaufenden Einschnitt und einer wiederum rechteckigen Innenrille zusammensetzt. Derartige Rillen sollen unter Beibehaltung einer hohen Profilsteifigkeit eine gute Entwässerung des Laufstreifens ermöglichen.

Ferner ist aus der JP H09 164 814 A ein Fahrzeugluftreifen bekannt, dessen Laufstreifen auf Profiltiefe ausgeführte Umfangsrillen aufweist, welche sich im Querschnitt und von der Laufstreifenperipherie ausgehend ebenfalls aus drei aneinander anschließenden Rillenabschnitten zusammensetzen, nämlich einem sich trichterförmig nach außen erweiternden radial äußeren Rillenabschnitt, einem verengten mittleren Rillenabschnitt und einem radial inneren, gegenüber dem verengten Rillenabschnitt erweiterten Rillenabschnitt. Der verengte mittlere Rillenabschnitt weist eine konstante Breite von 1,0 mm bis 4,0 mm auf.

Fahrzeugluftreifen, deren Laufstreifen Umfangsrillen der eingangs genannten Art aufweisen, haben den Vorteil einer guten Entwässerung des Laufstreifens bei neuem Reifen und verhindern in Folge des verengten zweiten Rillenabschnittes ein Verfangen von Steinen. Der dritte, erweiterte Rillenabschnitt sorgt schließlich bei zunehmender Abnutzung des Laufstreifens für einen weitgehend gleichmäßigen Abrieb. Nicht zufriedenstellend sind in bei weiter fortgeschrittenem Abrieb des Laufstreifens die Nassgriffeigenschaften sowie die Bremsperformance auf nassem Untergrund.

Der Erfindung liegt somit die Aufgabe zu Grunde, bei einem Nutzfahrzeugreifen der eingangs genannten Art durch eine einfache Maßnahme in jenem Abnützungsstadium, in welchem bereits der radial innere, erweiterte Rillenabschnitt an der Laufstreifenaußenfläche vorliegt, die Nassgriffeigenschaften und die Bremseigenschaften auf Nässe deutlich zu verbessern.

Gelöst wird die gestellte Aufgabe erfindungsgemäß dadurch, dass die seitlichen Rillenflanken im radial inneren Rillenabschnitt in Richtung ihrer Umfangserstreckung in einer Wellenform verlaufen, wobei die Wellenform eine Amplitude aufweist, die vom radial äußeren Ende der Rillenflanken bis zum Rillenboden kontinuierlich geringer wird, bis zum Rillenboden insbesondere auf den Wert Null abnimmt.

Durch die erfindungsgemäße Ausgestaltung der Rillenflanken im radial inneren erweiterten Rillenabschnitt in Wellenform weisen bei Erreichen des entsprechenden Abriebzustandes die Rillenkanten an der Laufstreifenaußenfläche durch ihre Wellenform eine wesentlich größere Kantenlänge auf als gerade verlaufende Rillenkanten. Dadurch wird eine merkliche Verbesserung des Nassgriffes und eine Verbesserung der Bremseigenschaften auf nassen Fahrbahnen erreicht.

Bei einer bevorzugten Ausführung, bei welcher die Profilierung des Laufstreifens eine einzige Pitchlänge oder eine mittlere Pitchlänge aufweist, weisen die Rillenflanken eine Wellenform mit einer vorzugsweise konstanten Wellenlänge auf, welche mindestens 1/8 der Pitchlänge bzw. 1/8 der mittleren Pitchlänge und höchstens der Pitchlänge bzw. der mittleren Pitchlänge entspricht. Mit einer derartigen Ausführung lässt sich bei fortgeschrittenem Abrieb eine besonders deutliche Verbesserung des Nassgriffes und der Bremseigenschaften auf nassen Fahrbahnen erzielen.

Bei einer weiteren bevorzugten Ausführung beträgt die größte Amplitude der Wellenform der Rillenflanken 0,5 mm bis 2,0 mm.

Eine weitere Maßnahme, welche vor allem für einen gleichmäßigen Abrieb von Vorteil ist, besteht darin, dass die den radial inneren Rillenabschnitt mitbegrenzenden Deckenflanken zueinander spitzdachförmig und zur radialen Richtung unter einem stumpfen Außenwinkel von 95° bis 135° verlaufen.

Um auch im Neuzustand des Reifens einen besonders guten Nassgriff und besonders gute Bremseigenschaften auf nassem Untergrund sicherzustellen, ist es von Vorteil, wenn der radial äußere, trichterförmige Rillenabschnitt von zwei Rillenflanken gebildet ist, die unter einem Winkel von 25° bis 70° zur radialen Richtung verlaufen und wenn die Breite des radial äußeren, im Querschnitt trichterförmigen Rillenabschnittes an der Laufstreifenaußenfläche 3,0 mm bis 22,0 mm beträgt. Dabei reicht der radial äußere, im Querschnitt trichterförmige Rillenabschnitt bis in eine Tiefe von 15 % bis 30 % der Profiltiefe.

Der Nassgriff und die Bremseigenschaften auf nassem Untergrund lassen sich sowohl mit Ausführungen verbessern, bei welchen die beiden einander gegenüberliegenden Rillenflanken im radial inneren Rillenabschnitt parallel zueinander verlaufende Wellenformen aufweisen, als auch mit Ausführungen, bei welchen die beiden einander gegenüberliegenden Rillenflanken im radial inneren Rillenabschnitt bezüglich einer in radialer Richtung verlaufenden Mittelebene der Umfangsrille symmetrisch zueinander verlaufende Wellenformen aufweisen.

Grundsätzlich sind Ausführungsformen bevorzugt, bei welchen die Umfangsrillen insgesamt bezüglich ihrer in radialer Richtung verlaufenden Mittelebenen symmetrisch ausgeführt sind.

Weitere Merkmale, Vorteile und Einzelheiten der Erfindung werden nun anhand der Zeichnung, die mehrere Ausführungsbeispiele darstellt, näher beschrieben. Dabei zeigen
Fig. 1a bis Fig. 1d Querschnitte einer Umfangsrille eines Laufstreifens eine nicht erfindungsgemäßen Fahrzeugluftreifens bei zunehmendem Abrieb des Laufstreifens, wobei jedem Querschnitt eine zugehörige Draufsicht auf einen kurzen Umfangsabschnitt der Umfangsrille zugeordnet ist,
Fig. 2a bis 2d eine weitere, nicht erfindungsgemäße Ausführungsvariante einer Umfangsrille in zu Fig. 1a bis 1d analogen Darstellungen,
Fig. 3a bis Fig. 3d eine erfindungsgemäße Ausführungsvariante einer Umfangsrille in zu Fig. 1a bis 1d analogen Darstellungen,
Fig. 4a und 4b schematische Ansichten (Draufsichten) von erfindungsgemäßen Ausführungen von Wellenformen von Rillenflanken und
Fig. 5a und Fig. 5b schematische Ansichten (Draufsichten) von Wellenformen von Rillenflanken zur Erläuterung von Wellenlängenbereichen.

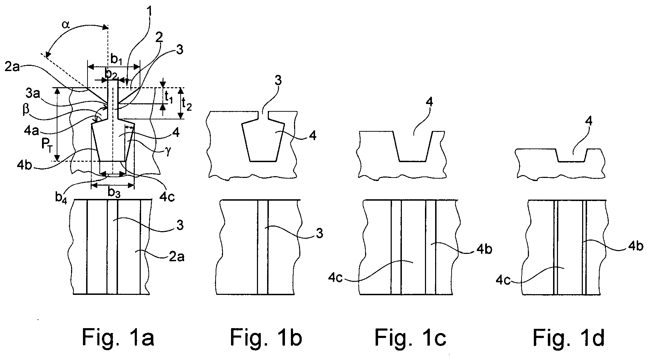

Die Figuren 1a bis 1d, 2a bis 2d und 3a bis 3d zeigen jeweils Querschnitte durch eine Umfangsrille in einem Laufstreifen eines Fahrzeugluftreifens sowie die zugehörigen Draufsichten auf Umfangsabschnitte der Umfangsrille. Erfindungsgemäß gestaltete Umfangsrillen sind in einer Anzahl von insbesondere zwei bis fünf und vorzugsweise in Laufstreifen von Nutzfahrzeugreifen vorgesehen. Die Umfangsrillen gliedern den Laufstreifen in Umfangsrichtung in Profilrippen, gegebenenfalls gemeinsam mit anders gestalteten Umfangsrillen. Die Profilrippen selbst können in an sich bekannter Weise klotzartig strukturiert sein. Die Umfangsrillen 1 gehören zu den oder sind die Hauptrillen im Laufstreifen und sind daher auf die vorgesehene Profiltiefe P_{T} ausgeführt, die je nach Reifentyp üblicherweise zwischen 12 mm und 25 mm beträgt.

Fig. 1a, 2a und 3a zeigen jeweils eine Umfangsrille 1 in ihrem Zustand bei neuem Reifen. Die Umfangsrille 1 ist bezüglich einer mittigen, in radialer Richtung verlaufenden Ebene, die in Fig. 1a, 2a und 3a mit einer gestrichelten Linie angedeutet ist, symmetrisch ausgeführt und weist in radialer Richtung drei Abschnitte auf, einen radial äußeren Rillenabschnitt 2, einen verengten Rillenabschnitt 3 und einen erweiterten, inneren Rillenabschnitt 4.

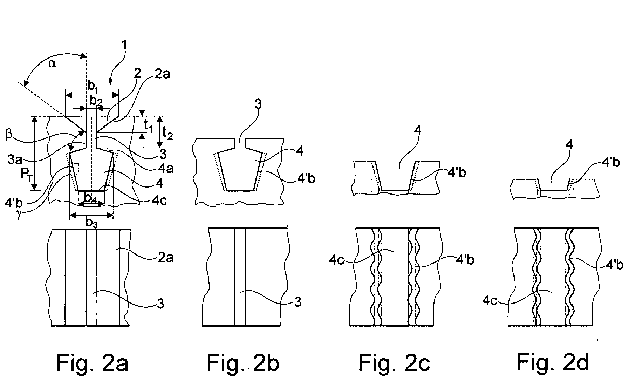

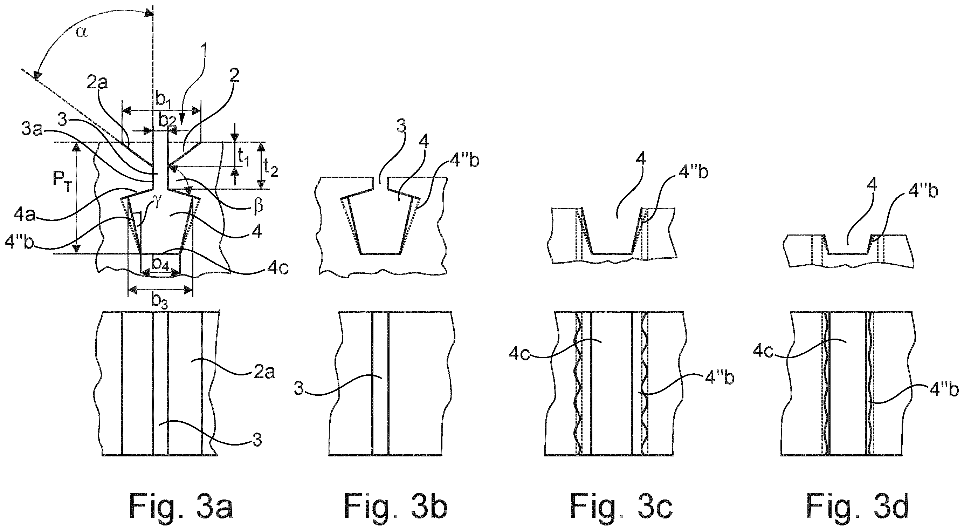

Der radial äußere Rillenabschnitt 2 ist im Querschnitt trichterförmig gestaltet, verbreitert sich zur Laufstreifenaußenfläche und ist von zwei Rillenflanken 2a begrenzt, die unter einem Winkel α von 25° bis 70°, insbesondere 45° bis 70°, zur radialen Richtung verlaufen. Die Breite b₁ des Rillenabschnittes 2 an der Laufstreifenaußenfläche beträgt 3 mm bis 22 mm, insbesondere 8 mm bis 22 mm, je nach Reifentyp. Der Rillenabschnitt 2 erstreckt sich in radialer Richtung bis in eine Tiefe t₁, die 15 % bis 30 % der Profiltiefe P_{T} beträgt. An den Rillenabschnitt 2 schließt unmittelbar der verengte Rillenabschnitt 3 an, welcher von zwei in radialer Richtung verlaufenden Rillenflanken 3a begrenzt ist, die an die Rillenflanken 2a anschließen. Die Breite b₂ des Rillenabschnittes 3 beträgt 1 mm bis 3 mm. Der Rillenabschnitt 3 reicht bis in eine Tiefe t₂, die 30 % bis 60 %, insbesondere bis 45 %, der Profiltiefe P_{T} beträgt. An den Rillenabschnitt 3 schließt unmittelbar der erweiterte, innere Rillenabschnitt 4 an, welcher von zwei Deckenflanken 4a, einem Rillenboden 4c, bei der Ausführung gemäß Fig. 1a bis 1d von zwei seitlichen Rillenflanken 4b, bei der Ausführung gemäß Fig. 2a bis 2d von zwei seitlichen Rillenflanken 4'b und bei der Ausführung gemäß Fig. 3a bis 3d von zwei seitlichen Rillenflanken 4"b begrenzt ist.

Die beiden Deckenflanken 4a verlaufen ausgehend von den Rillenflanken 3a jeweils unter einem stumpfen Außenwinkel β zu diesen, welcher 95° bis 135°, insbesondere bis 105°, beträgt. An den äußeren Enden der beiden Deckenflanken 4a besitzt der Rillenabschnitt 4 seine größte Breite b₃. Die beiden seitlichen Rillenflanken 4b, 4'b und 4"b schließen jeweils unmittelbar an die Deckenflanken 4a an und verlaufen Richtung Rillenboden 4c unter Verringerung ihres gegenseitigen Abstandes unter einem Winkel γ von 5° bis 25°, vorzugsweise von 10° bis 20°, zur radialen Richtung. Der Rillenboden 4c, welcher sich in der Profiltiefe P_{T} befindet, verbindet die radial inneren Enden der seitlichen Rillenflanken 4b und weist eine Breite b₄ auf.

Bei der in Fig. 1a bis 1d gezeigten nicht erfindungsgemäßen Ausführung sind die Rillenflanken 4b ebene Flächen.

Fig. 1b zeigt einen Abnützungszustand des Laufstreifens, in welchem der Laufstreifen etwa bis zur Mitte des Rillenabschnittes 3 abgerieben ist, Fig. 1c und 1d zeigen Abriebzustände, in welchen der Abrieb des Laufstreifens bereits derart weit fortgeschritten ist, dass an der Laufstreifenoberfläche nur noch der erweiterte Rillenabschnitt 4 vorliegt.

Die in den Figuren 2a bis 2d und 3a bis 3d gezeigten Ausführungsformen der Umfangsrille 1 unterschieden sich von jener gemäß Fig. 1a bis 1d in der Ausgestaltung der seitlichen Rillenflanken 4'b und 4"b, welche keine ebenen Flächen sind, sondern jeweils wellenförmig ausgeführt sind und eine in Richtung ihrer Umfangserstreckung verlaufende Wellenform aufweisen. Bei der nicht erfindungsgemäßen Ausführungsform gemäß Fig. 2a bis 2d weist die Wellenform eine konstante Wellenlänge λ und eine konstante Amplitude A auf, welche 0,5 mm bis 2 mm, insbesondere bis 1 mm, beträgt. Die die Wellen der seitlichen Rillenflanken 4'b innenseitig des Rillenabschnittes 4 einhüllenden Flächen bestimmen die Breiten b₃ und b₄ sowie den Winkel γ. Fig. 2b zeigt die Umfangsrille 1 bei neuem Reifen, die Figuren 2c und 2d zeigen einen Abriebzustand, in welchem der Laufstreifen bereits bis in den Rillenabschnitt 4 abgerieben ist, sodass in der Draufsicht die Wellenform der radial äußeren Kanten der seitlichen Rillenflanken 4'b und die Wellenform der seitlichen Begrenzungskanten des Rillenbodens 4c zu sehen sind.

Bei der in Fig. 3a bis 3d gezeigten erfindungsgemäßen Ausführungsform weisen die seitlichen Rillentlanken 4"b im Rillenabschnitt 4 ebenfalls eine Wellenform auf, die in Umfangsrichtung der Rillenflanken 4"b verläuft. Bei dieser Ausführungsform ändert sich jedoch die Amplitude A der Wellenform, sie nimmt vom radial äußeren Ende der seitlichen Rillenflanken 4"b bis zum radial inneren Ende der Rillenflanken 4"b am Rillenboden 4c kontinuierlich ab, insbesondere bis auf den Wert Null. Die Wellenlänge λ der Wellenform bleibt insbesondere konstant. Auch bei dieser Ausführungsform sind die einhüllenden Flächen innenseitig der seitlichen Rillenflanken 4"b jene, die die Breiten b₃ und b₄ sowie den Winkel γ, wie oben erläutert und beschrieben, definieren. Die Wellenform der seitlichen Rillenflanken 4"b besitzt daher an deren radial äußeren Enden ihre größte Amplitude A, die 0,5 mm bis 2 mm, insbesondere bis 1 mm, beträgt. Fig. 3c zeigt einen Abriebzustand des Laufstreifens, bei welchem der Laufstreifen bis in den Rillenabschnitt 4 abgerieben ist, in der Draufsicht sind die Wellenform der Rillenkanten der seitlichen Rillenflanken 4"b an der Laufstreifenaußenfläche und die in Umfangsrichtung und gerade verlaufenden seitlichen Ränder des Rillenbodens 4c zu erkennen. Fig. 3d zeigt einen noch weiter fortgeschrittenen Abriebzustand, die Wellenform der Rillenkanten der seitlichen Rillenflanken 4"b an der Laufstreifenaußenfläche haben eine nur noch schwache Wellenform mit geringerer Amplitude A als in Fig. 3c.

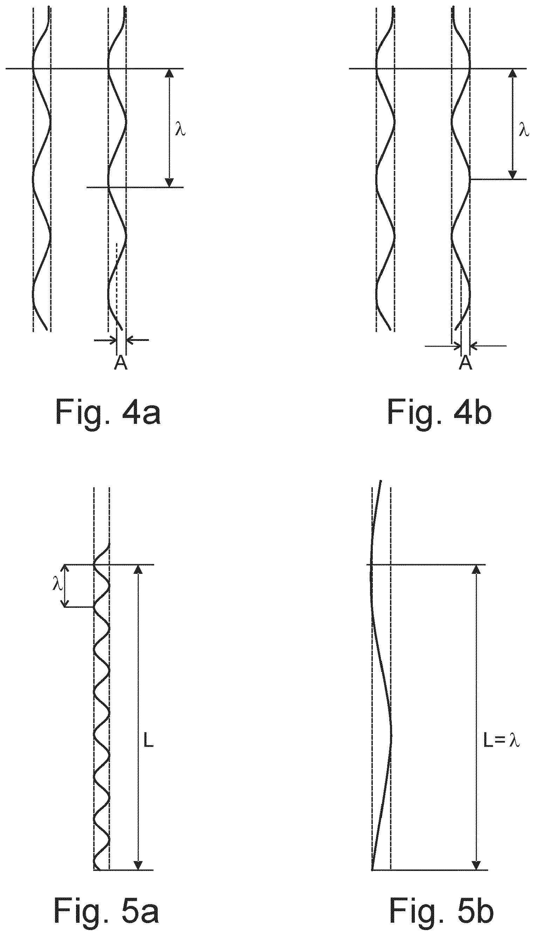

Fig. 4a und 4b zeigen Möglichkeiten der Ausgestaltung der Wellenformen der beiden einander gegenüberliegenden seitlichen Rillenflanken 4'b, 4"b im Rillenabschnitt 4 in Draufsicht. Gemäß Fig. 4a weisen die beiden einander gegenüberliegenden seitlichen Rillenflanken 4'b, 4"b parallel zueinander verlaufende Wellenformen auf. Bei der in Fig. 4b gezeigten Ausführung sind die Wellenformen der beiden seitlichen Rillenflanken 4'b, 4"b bezüglich der mittigen Symmetrieebene symmetrisch ausgeführt.

Fig. 5a und 5b verdeutlichen die bevorzugte kleinste und die bevorzugte größte Wellenlänge λ der Wellenform der seitlichen Rillenflanken 4'b, 4"b. Die minimale Wellenlänge A zeigt Fig. 5a, sie beträgt 1/8 der Pitchlänge L der Profilierung des Laufstreifens, wobei bei Nutzfahrzeugreifen die Pitchlänge L für alle über den Umfang des Laufstreifens vorgesehene Pitches gleich groß ist. Fig. 5b zeigt die maximale Wellenlänge λ, diese entspricht der Pitchlänge L. In einem Laufstreifenprofil eines Nutzfahrzeugreifens entspricht eine Pitchlänge L beispielsweise der Umfangslänge eines Profilblockes oder eines blockartig strukturiertes Profilpositiv mitsamt einer Querrille. In Laufstreifenprofilen mit unterschiedlichen Pitchlängen ist die Pitchlänge L der arithmetische Mittelwert der vorgesehenen unterschiedlich langen Pitchlängen.

Nachdem Umfangsrillen in Laufstreifen üblicherweise durch von ihnen abzweigende Querrillen oder dergleichen unterbrochen sind, ist die erfindungsgemäße Ausgestaltung der Umfangsrillen in den entsprechenden Umfangsabschnitten der Umfangsrillen vorhanden.

### Bezugsziffernliste

- 1: Umfangsrille
- 2: Rillenabschnitt
- 2a: Rillenflanken
- 3: Rillenabschnitt
- 3a: Rillenflanken
- 4: Rillenabschnitt
- 4a: Deckenflanken
- 4b, 4'b, 4"b: Rillenflanken
- 4c: Rillenboden
- P_{T}: Profiltiefe
- b₁ b₂, b₃, b₄: Breite
- A: Amplitude
- α, β, γ: Winkel
- λ: Wellenlänge
- t₁, t₂: Tiefe
- a₁, a₂, a₃: Parameter
- L: Pitchlänge
- P_{T}: Profiltiefe

## Patentansprüche

1. Fahrzeugluftreifen, insbesondere Nutzfahrzeugreifen, mit einem eine Profilierung aufweisenden Laufstreifen mit zumindest einer in Umfangsrichtung umlaufenden, auf Profiltiefe (P_{T}) ausgeführten Umfangsrille (1), welche sich im Querschnitt, beginnend bei der Laufstreifenaußenfläche, aus drei aneinander anschließenden Rillenabschnitten (2, 3, 4) zusammensetzt, einem sich trichterförmig nach außen erweiternden radial äußeren Rillenabschnitt (2), einem 1 mm bis 3 mm breiten verengten Rillenabschnitt (3) und einem gegenüber dem verengten Rillenabschnitt (3) erweiterten und die größte Querschnittsfläche von allen Rillenabschnitten (2, 3, 4) aufweisenden radial inneren Rillenabschnitt (4), welcher von zwei Deckenflanken (4a), an diese anschließende seitliche Rillenflanken (4'b, 4"b) und einem Rillenboden (4c) begrenzt ist, wobei die seitlichen Rillenflanken (4'b, 4"b) im radial inneren Rillenabschnitt (4) unter Verringerung ihres gegenseitigen Abstandes zum Rillenboden (4c) unter einem Winkel (y) von 5° bis 25° zur radialen Richtung verlaufen,
**dadurch gekennzeichnet,**
**dass** die seitlichen Rillenflanken (4'b, 4"b) im radial inneren Rillenabschnitt (4) in Richtung ihrer Umfangserstreckung in einer Wellenform verlaufen, wobei die Wellenform eine Amplitude (A) aufweist, die vom radial äußeren Ende der Rillenflanken (4"b) bis zum Rillenboden (4c) kontinuierlich geringer wird, bis zum Rillenboden (4c) insbesondere auf den Wert Null abnimmt.

2. Fahrzeugluftreifen nach Anspruch 1, wobei die Profilierung des Laufstreifens eine einzige Pitchlänge oder eine mittlere Pitchlänge aufweist, **dadurch gekennzeichnet, dass** die Rillenflanken (4'b, 4"b) eine Wellenform mit einer vorzugsweise konstanten Wellenlänge (A) aufweisen, welche mindestens 1/8 der Pitchlänge (L) bzw. 1/8 der mittleren Pitchlänge und höchstens der Pitchlänge (L) bzw. der mittleren Pitchlänge entspricht.

3. Fahrzeugluftreifen nach Anspruch 1 oder 2, **dadurch gekennzeichnet, dass** die größte Amplitude (A) der Wellenform der Rillenflanken (4'b, 4"b) 0,5 mm bis 2,0 mm beträgt.

4. Fahrzeugluftreifen nach einem der Ansprüche 1 bis 3, **gekennzeichnet dadurch, dass** die den radial inneren Rillenabschnitt (4) mitbegrenzenden Deckenflanken (4a) zueinander spitzdachförmig und zur radialen Richtung unter einem stumpfen Außenwinkel (β) von 95° bis 135° verlaufen.

5. Fahrzeugluftreifen nach einem der Ansprüche 1 bis 4, **gekennzeichnet dadurch, dass** der radial äußere, trichterförmige Rillenabschnitt (2) von zwei Rillenflanken (2a) gebildet ist, die unter einem Winkel (α) von 25° bis 70° zur radialen Richtung verlaufen.

6. Fahrzeugluftreifen nach einem der Ansprüche 1 bis 5, **dadurch gekennzeichnet, dass** die Breite (b₁) des radial äußeren, im Querschnitt trichterförmigen Rillenabschnittes (2) an der Laufstreifenaußenfläche 3,0 mm bis 22,0 mm beträgt.

7. Fahrzeugluftreifen nach einem der Ansprüche 1 bis 6, **dadurch gekennzeichnet, dass** der verengte Rillenabschnitt (3) in radialer Richtung verlaufende Rillenflanken (3a) aufweist und bis in eine Tiefe (t₂) von 30 % bis 60 % der Profiltiefe (P_{T}) reicht.

8. Fahrzeugluftreifen nach einem der Ansprüche 1 bis 7, **dadurch gekennzeichnet, dass** der radial äußere, im Querschnitt trichterförmige Rillenabschnitt (2) bis in eine Tiefe (t₁) von 15 % bis 30 % der Profiltiefe (P_{T}) reicht.

9. Fahrzeugluftreifen nach einem der Ansprüche 1 bis 8, **dadurch gekennzeichnet, dass** die beiden einander gegenüberliegenden Rillenflanken (4'b, 4"b) im radial inneren Rillenabschnitt (4) parallel zueinander verlaufende Wellenformen aufweisen.

10. Fahrzeugluftreifen nach einem der Ansprüche 1 bis 9, **dadurch gekennzeichnet, dass** die beiden einander gegenüberliegenden Rillenflanken (4'b, 4"b) im radial inneren Rillenabschnitt (4) bezüglich einer in radialer Richtung verlaufenden Mittelebene der Umfangsrille (1) symmetrisch zueinander verlaufende Wellenformen aufweisen.

11. Fahrzeugluftreifen nach einem der Ansprüche 1 bis 10, **dadurch gekennzeichnet, dass** die Umfangsrille (1) bezüglich ihrer in radialer Richtung verlaufenden Mittelebene symmetrisch ausgeführt ist.

## Claims

1. Pneumatic vehicle tyre, in particular a commercial vehicle tyre, having a tread which has a profile and has at least one circumferential groove (1) which is encircling in the circumferential direction, is embodied to a profile depth (P_{T}) and in the cross section, starting at the tread external face, is composed of three adjoining groove portions (2, 3, 4), one outer groove portion (2) that expands in a funnel-shaped manner toward the outside, one 1 mm to 3 mm wide contracted groove portion (3), and one groove portion (4) which lies radially inward, is expanded in relation to the contracted groove portion (3) and has the largest cross-sectional face of all groove portions (2, 3, 4), and which is delimited by two cover flanks (4a), lateral groove flanks (4'b, 4''b) that adjoin said cover flanks (4a), and a groove base (4c), wherein the lateral groove flanks (4'b, 4"b) in the radially inward groove portion (4), while reducing the mutual spacing thereof from the groove base (4c), run at an angle (γ) of 5° to 25° in relation to the radial direction,
**characterized in that**
the lateral groove flanks (4'b, 4''b) in the radially inward groove portion (4) in the direction of the circumferential extent of said lateral groove flanks (4'b, 4''b) run in a wave form, wherein the wave form has an amplitude (A) which continuously decreases from the radially outer end of the groove flanks (4''b) to the groove base (4c), in particular decreases to the value of zero toward the groove base (4c).

2. Pneumatic vehicle tyre according to Claim 1, wherein the profile of the tread has a single pitch length or a mean pitch length, **characterized in that** the groove flanks (4'b, 4''b) have a wave form having a preferably constant wave length (λ) which corresponds to at least 1/8 of the pitch length (L), or 1/8 of the mean pitch length, respectively, and at most the pitch length (L), or the mean pitch length, respectively.

3. Pneumatic vehicle tyre according to Claim 1 or 2, **characterized in that** the greatest amplitude (A) of the wave form of the groove flanks (4'b, 4''b) is 0.5 mm to 2.0 mm.

4. Pneumatic vehicle tyre according to one of Claims 1 to 3, **characterized in that** the cover flanks (4a) that participate in delimiting the radially inner portion (4) mutually run in the manner of a pointed roof and at an obtuse external angle (β) of 95° to 135° in relation to the radial direction.

5. Pneumatic vehicle tyre according to one of Claims 1 to 4, **characterized in that** the radially outer funnel-shaped groove portion (2) is formed by two groove flanks (2a) which in relation to the radial direction run at an angle (α) of 25° to 70°.

6. Pneumatic vehicle tyre according to one of Claims 1 to 5, **characterized in that** the width (b₁) of the radially outer groove portion (2) that is funnel-shaped in the cross section is 3.0 mm to 22.0 mm on the tread external face.

7. Pneumatic vehicle tyre according to one of Claims 1 to 6, **characterized in that** the contracted groove portion (3) has groove flanks (3a) that run in the radial direction and reaches down to a depth (t₂) of 30% to 60% of the profile depth (P_{T}).

8. Pneumatic vehicle tyre according to one of Claims 1 to 7, **characterized in that** the radially outer groove portion (2) that is funnel-shaped in the cross section reaches down to a depth (t₁) of 15% to 30% of the profile depth (P_{T}) .

9. Pneumatic vehicle tyre according to one of Claims 1 to 8, **characterized in that** the two mutually opposite groove flanks (4'b, 4''b) in the radially inner groove portion (4) have wave forms that run in a mutually parallel manner.

10. Pneumatic vehicle tyre according to one of Claims 1 to 9, **characterized in that** the two mutually opposite groove flanks (4'b, 4''b) in the radially inner groove portion (4) have wave forms that run in a mutually symmetrical manner in relation to a central plane of the circumferential groove (1) that runs in the radial direction.

11. Pneumatic vehicle tyre according to one of Claims 1 to 10, **characterized in that** the circumferential groove (1) is embodied so as to be symmetrical in relation to the central plane thereof that runs in the radial direction.

## Revendications

1. Pneumatique de véhicule, en particulier pneumatique de véhicule utilitaire, comportant une bande de roulement comprenant un profilage et dotée d'au moins une rainure périphérique (1) s'étendant dans la direction périphérique et réalisée sur une profondeur de profilé (P_{T}), laquelle rainure périphérique se compose de trois parties de rainure (2, 3, 4) se raccordant les unes aux autres à partir de la surface extérieure de la bande de roulement en section transversale, à savoir une partie de rainure (2) radialement extérieure s'élargissant vers l'extérieur en forme d'entonnoir, une partie de rainure resserrée (3) de 1 mm à 3 mm de large et une partie de rainure (4) radialement intérieure élargie par rapport à la partie de rainure resserrée (3) et présentant la plus grande aire en section transversale de toutes les parties de rainure (2, 3, 4), laquelle partie de rainure est délimitée par deux flancs supérieurs (4a), des flancs de rainure latéraux (4'b, 4"b) se raccordant à ceux-ci et un fond de rainure (4c), dans lequel les flancs de rainure latéraux (4'b, 4''b) dans la partie de rainure radialement intérieure (4) s'étendent, de manière à réduire leur espacement mutuel, par rapport au fond de rainure (4c) suivant un angle (γ) de 5° à 25° par rapport à la direction radiale,
**caractérisé en ce que**
les flancs de rainure latéraux (4'b, 4"b) dans la partie de rainure radialement intérieure (4) s'étendent suivant une forme d'onde dans la direction de leur étendue périphérique, la forme d'onde présentant une amplitude (A) qui diminue de manière continue à partir de l'extrémité radialement extérieure des flancs de rainure (4''b) jusqu'au fond de rainure (4c), et décroît en particulier jusqu'à la valeur zéro jusqu'au fond de rainure (4c).

2. Pneumatique de véhicule selon la revendication 1, dans lequel le profilage de la bande de roulement présente une longueur de pas unique ou une longueur de pas moyenne, **caractérisé en ce que** les flancs de rainure (4'b, 4''b) présentent une forme d'onde dotée d'une longueur d'onde (λ) de préférence constante, laquelle correspond à au moins 1/8 de la longueur de pas (L) ou 1/8 de la longueur de pas moyenne et au maximum à la longueur de pas (L) ou à la longueur de pas moyenne.

3. Pneumatique de véhicule selon la revendication 1 ou 2, **caractérisé en ce que** la plus grande amplitude (A) de la forme d'onde des flancs de rainure (4'b, 4''b) vaut de 0,5 mm à 2,0 mm.

4. Pneumatique de véhicule selon l'une des revendications 1 à 3, **caractérisé en ce que** les flancs supérieurs (4a) délimitant conjointement la partie de rainure radialement intérieure (4) s'étendent en forme de toit pointu l'un par rapport à l'autre et suivant un angle extérieur obtus (β) de 95° à 135° par rapport à la direction radiale.

5. Pneumatique de véhicule selon l'une des revendications 1 à 4, **caractérisé en ce que** la partie de rainure (2) radialement extérieure en forme d'entonnoir est formée par deux flancs de rainure (2a) qui s'étendent suivant un angle (α) de 25° à 70° par rapport à la direction radiale.

6. Pneumatique de véhicule selon l'une des revendications 1 à 5, **caractérisé en ce que** la largeur (b₁) de la partie de rainure (2) radialement extérieure, en forme d'entonnoir en section transversale, vaut de 3,0 mm à 22,0 mm au niveau de la surface extérieure de la bande de roulement.

7. Pneumatique de véhicule selon l'une des revendications 1 à 6, **caractérisé en ce que** la partie de rainure resserrée (3) comprend des flancs de rainure (3a) s'étendant dans la direction radiale et va jusqu'à une profondeur (t₂) de 30 % à 60 % de la profondeur de profilé (P_{T}) .

8. Pneumatique de véhicule selon l'une des revendications 1 à 7, **caractérisé en ce que** la partie de rainure (2) radialement extérieure, en forme d'entonnoir en section transversale, va jusqu'à une profondeur (t₁) de 15 % à 30 % de la profondeur de profilé (P_{T}).

9. Pneumatique de véhicule selon l'une des revendications 1 à 8, **caractérisé en ce que** les deux flancs de rainure (4'b, 4"b) en regard l'un de l'autre dans la partie de rainure radialement intérieure (4) présentent des formes d'onde s'étendant parallèlement les unes aux autres.

10. Pneumatique de véhicule selon l'une des revendications 1 à 9, **caractérisé en ce que** les deux flancs de rainure (4'b, 4"b) en regard l'un de l'autre dans la partie de rainure radialement intérieure (4) présentent des formes d'onde s'étendant symétriquement les unes par rapport aux autres par rapport à un plan médian, s'étendant dans la direction radiale, de la rainure périphérique (1).

11. Pneumatique de véhicule selon l'une des revendications 1 à 10, **caractérisé en ce que** la rainure périphérique (1) est réalisée symétriquement par rapport à son plan médian s'étendant dans la direction radiale.
